Europäisches Patentamt

European Patent Office

Office européen des brevets

(11) Publication number: **0 156 543**
**B1**

# EUROPEAN PATENT SPECIFICATION

(45) Date of publication of patent specification: **18.07.90**

(51) Int. Cl.⁵: **F 02 B 41/00,** F 02 B 23/08, F 02 B 75/28

(21) Application number: **85301483.5**

(22) Date of filing: **04.03.85**

(54) Internal combustion engine.

(30) Priority: **10.03.84 GB 8406337**

(43) Date of publication of application:
**02.10.85 Bulletin 85/40**

(45) Publication of the grant of the patent:
**18.07.90 Bulletin 90/29**

(84) Designated Contracting States:
**AT BE CH DE FR IT LI LU NL SE**

(56) References cited:
**EP-A-0 026 592**
**EP-A-0 030 832**
**US-A-3 923 011**
**US-A-4 170 970**

(73) Proprietor: **COVENTRY CITY COUNCIL**
**The Council House Earl Street**
**Coventry West Midlands CV1 5RR (GB)**
(73) Proprietor: **Merritt, Dan, Dr.**
**139 Baginton Road**
**Coventry West Midlands (GB)**

(72) Inventor: **Merritt, Dan**
**139 Baginton Road**
**Coventry West Midlands (GB)**

(74) Representative: **Hallam, Arnold Vincent**
**E.N. Lewis & Taylor 5 The Quadrant**
**Coventry CV1 2EL Warwickshire (GB)**

Courier Press, Leamington Spa, England.

## Description

The present invention relates to internal combustion engines.

US—A-3,923,011 describes an internal combustion engine which uses a catalyst for igniting the fuel/air mixture. The catalyst fills the whole of the cross-section of the combustion chamber and since the piston diameters are the same, fuel which is introduced into one of the cylinders will contact the catalyst and be ignited during compression unless the fuel is segregated until the end of the compression stroke. In this engine, therefore, fuel has to be injected at the end of the compression stroke.

EO—A—0,026,592 has a working piston and an auxiliary piston whose cylinders are interconnected by means of a restricted connecting channel. The relative timing of the two pistons is adjustable to vary the compression ratio of the engine. The auxiliary piston functions as a compression and ignition means by moving rapidly towards its top dead centre position only when the main piston is close to its top dead centre position.

EP—A—0,030,832 describes an engine which is a timed spark ignition engine. The engine operates on a two stroke cycle and has a piston reciprocable in a cylinder to drive a crank shaft and also to inhale and compress a volume of air. A second piston working in a separate cylinder coaxial with and opposed to the first cylinder is synchronised to the first piston. The second piston acts to introduce a compressed charge of mixture of air and fuel through a non-return valve into a relatively small ignition chamber which includes a spark plug and communicates with a combustion chamber in the head of the main cylinder. The fuel and air mixture is introduced into the combustion chamber during the early part of the compression stroke, the second piston acting as a pump and not a work-producing piston.

The present invention seeks to provide an improved form of internal combustion engine.

Accordingly the present invention provides an internal combustion engine comprising:

at least one pair of first and second cylinders;

a combustion chamber interconnecting said cylinders at their head ends;

continuously operable ignition means in said combustion chamber;

respective first and second work producing pistons movable in said cylinders towards and away from said combustion chamber;

a mechanical coupling between the two pistons which causes the pistons to move relative to one another;

first means for supplying air or other oxygen containing gases into said first cylinder during an induction stroke of said first piston;

second means for supplying fuel to said second cylinder; characterised in that:

said first cylinder has a larger swept volume than said second cylinder;

said ignition means only partially fills the combustion chamber cross section;

said second means is operable to supply fuel to said second cylinder during an induction stroke of said second piston;

third means are provided comprising a restriction means between the bombustion chamber and the second cylinder for assisting the mixing of said fuel/air mixture with air or other oxygen containing gases in said combustion chamber during combustion;

and in that the mechanical coupling between the two pistons causes the pistons to create a pressure difference across the restriction means to inhibit flow of fuel/air mixture from the second cylinder into the combustion chamber for ignition by said ignition means until said first piston is in the vicinity of its Top Dead Centre.

Preferably, the second means is operable to supply a charge of fuel only, directly into said second cylinder.

Advantageously, common exhaust port means are provided opening into said first cylinder.

In a preferred form of the invention the ignition means is a catalyst ignition means.

The term "air or the like" used herein includes any suitable mixture of oxygen with other usually inert gases as well as substantially pure oxygen for combustion with a gaseous or liquid (i.e. vaporised liquid) fuel.

The term "freely inducted" used herein refers to the induction into a cylinder of air or the like without variable throttling which would normally be effected in an internal combustion engine by means of a butterfly valve in a carburettor.

The present invention is further described hereinafter, by way of example, with reference to the accompanying drawings, in which like parts have the same reference numbers and in which:

Figure 1 shows diagrammatically one embodiment of an internal combustion engine according to the present invention;

Figure 2 shows the engine of Figure 1 with one piston at T.D.C;

Figure 3 shows a modified form of the engine of Figure 1; and

Figure 4 shows a phasing diagram for the engine pistons of Figure 1.

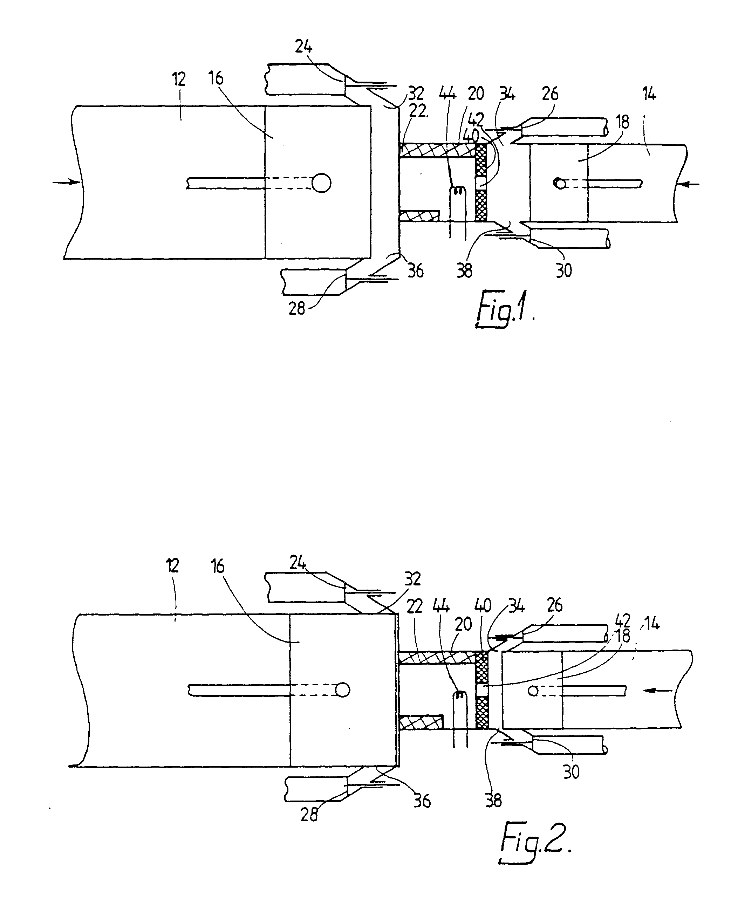

Referring now to Figures 1 and 2 the engine illustrated has one or more pairs of co-operating cylinders 12, 14 containing respective pistons 16, 18 the cylinders 12, 14 being arranged in a head to head manner so that the pistons 16, 18 are opposed. The head ends of the cylinders 12, 14 are in continuous communication via a combustion chamber 20. The cylinders 12, 14 are preferably axially aligned as shown (but may be offset) and for reasons described below one cylinder 12 is of larger swept volume than the other cylinder 14 and has a larger compression ratio.

For the purpose of defining the compression ratios of the cylinders 12, 14 their respective clearance volumes can be regarded as the common volume contained between the heads of the pistons 16, 18 when this volume reaches a minimum volume during the engine cycle. Thus the compression ratio of cylinder 12 is the ratio of the sum of the maximum volume swept by the piston 16 and the above-mentioned minimum volume, divided by the same minimum volume. Similarly, the compression ratio of cylinder 14 is the sum of the maximum volume swept by piston 18 and the minimum volume, all divided by the minimum volume. It will be appreciated that the minimum clearance volume is the same for each cylinder. It is essential for the operation of the engine that the compression ratio of cylinder 12, (the "air admission cylinder") is larger than the compression ratio of cylinder 14, the "fuel admission cylinder").

Since both cylinders 12, 14 intercommunicate and share a common piston clearance volume i.e. through the combustion chamber 20, the cylinder 12 must have a greater swept volume than the cylinder 14 in order to have a greater compression ratio than the latter based on the said clearance volume. The swept volume of the cylinder 12 determines the mass of air induced into the engine whereas the swept volume of the cylinder 14 determines the mass of gaseous fuel, or fuel mixed with air or the like induced or provided in the engine.

The combustion chamber 20 contains continuously operable ignition means in the form of a porous or like mass 22 of durable heat resistant material well able to withstand operating conditions. The material may conveniently consist of suitable catalytic material or materials but for practical purposes would usually carry or be coated with the catalytic material to provide an extended surface area of the latter. Thus the porous mass 22 is advantageously of metallic (e.g. an alloy such as "Fecralloy'" steel) or non-metallic material (e.g. ceramic) coated, such as by washcoating, with catalytic material and may be in the form of a porous or interstitial matrix or infrastructure in or through which gas flow can take place. The mass or matrix 22 may be rigid or semi-rigid, such as a body of mesh material, or of honeycomb or corrugated layer formation and partially fills the combustion chamber 30.

The catalytic material consists of one or more substances which by their presence effect a chemical reaction to initiate combustion at a temperature lower than otherwise possible but which do not take part in the chemical reaction. Thus, for example, the catalyst may consist of platinum or be platinum based, such as a combination of platinum, palladium and rhodium.

The larger swept volume cylinder 12 has the higher compression ratio and receives freely inducted air through an inlet port 24. The smaller swept volume cylinder 14 having the lower compression ratio receives through its inlet port 26 the fuel or fuel/air mixture.

The fuel is inducted into cylinder 14 in gaseous or vaporised form e.g. as propane or other suitable fuel gas. The fuel can be in the form of a fuel gas mixed through a variable metering jet with air or as liquid fuel (e.g. petrol) vaporised and suspended in air or other gas and supplied from a device which pre-mixes the liquid fuel in finely divided form with the air or other gas. Alternatively, in the case of liquid fuel it may be injected directly into the cylinder 14 at some time during the induction stroke for admixture with air received by the cylinder through the inlet port 26 thereto. It will be understood that the timing of the injected fuel is not critical since ignition does not depend on the timing of fuel injection.

The choice of compression ratios, particularly that of cylinder 12, for a given engine will be dependent on the choice of fuel to be used by the engine, and the temperature at which combustion is initiated and propogated at a sufficiently rapid chemical reaction rate when air and fuel are exposed to the catalyst in the combustion chamber 20.

At lower engine speeds, on a compression stroke the pistons 16, 18 move towards one another so that the piston 16 reaches top dead centre (TDC) before or no later than the piston 18. Thus, as indicated in Figure 2, the piston 18 may lag behind the piston 16 in this respect by a predetermined angular amount of crankshaft rotation for optimum operation of the engine at that engine speed.

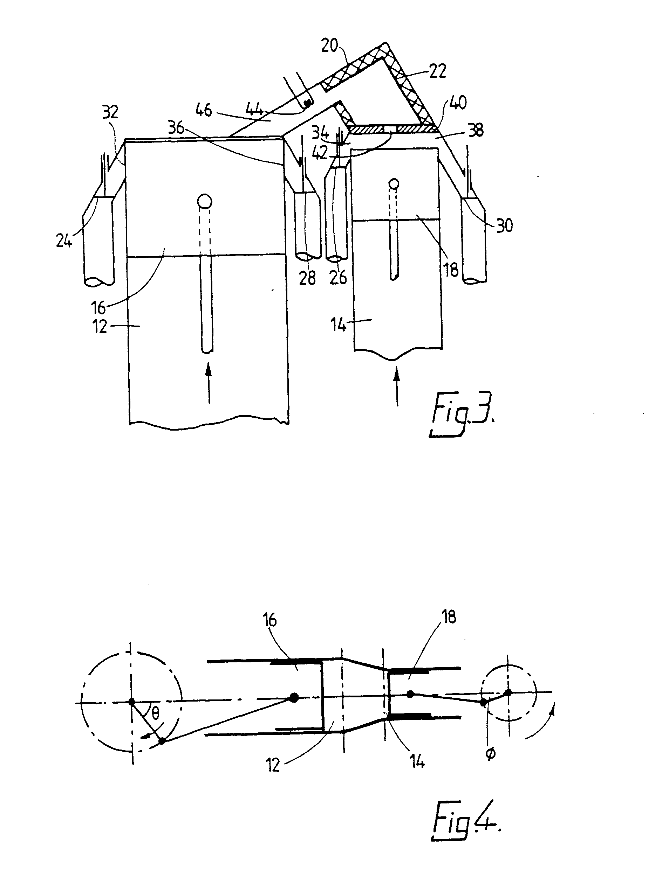

Figure 4 shows the phase difference between pistons 16 and 18 with piston 16 just past T.D.C.

At relatively low engine speed operation the amount of angular lag of crankshaft rotation of piston 18 behind piston 16 should be such that when piston 16 reaches its top dead centre, at the end of its compression stroke, the volume in cylinder 14 contained between the head of piston 18 and the adjacent boundary of the catalyst 22 in combustion chamber 20 accommodates the whole mass of fuel and air inducted into cylinder 14 and contained within cylinder 14 during the latter part of the compression stroke preceding the instant when piston 16 reaches its top dead centre.

For higher engine speeds the lag of piston 18 behind piston 16 may be reduced to smaller amounts of angular crankshaft rotation and may reach a zero value or even negative values in which case piston 18 may lead piston 16 if the engine requirement for the timing of the initiation of combustion in the combustion chamber 20 so dictates at that speed.

The pistons are interconnected and synchronised for such operation by any suitable form of crank, linkage, gear or other mechanism providing an output shaft such as a crankshaft for motive power output. The connecting mechanism may provide for variation in the amount of crankshaft angular phase difference between the pistons 18 and 16, e.g. to advance or retard ignition and/or to suit different fuels. This variation may be effected while the engine is running using a suitable self-adjusting mechanism. Likewise, valve gear for operation of the inlet valves 24, 26 and exhaust valves 28, 30 of respective ports 32, 34 and 36, 38 may be of any appropriate construction and mode of operation although timing of operation of the inlet valve 26 may be varied as referred to later.

Liquid or air cooling of the cylinders 12, 14 and' combustion chamber 20 is provided as appropriate.

During operation of the engine, since combustion occurs when the fuel/air mixture contacts the catalyst in the combustion chamber 20, entry of the fuel/air mixture into the catalyst 22 has to be controlled to obtain combustion at the correct time and rate of flow so as to avoid both delayed and premature combustion, especially the latter. The mechanical coupling between the two pistons causes the pistons to move relative to one another and create a pressure difference between the combustion chamber 20 and the second cylinder 14 to inhibit flow of fuel/air mixture into the combustion chamber for ignition by the catalyst so that combustion takes place when piston 16 is in the vicinity of its TDC.

In four stroke operation of the engine the sequence, beginning with an induction stroke, at lower engine speeds is as follows:

During the induction stroke of the pistons 16, 18 i.e. as they move apart from TDC, air only is drawn into cylinder 12 and a controlled amount of gaseous fuel or fuel/air mixture is admitted, or occurs, in cylinder 14.

The pistons 16, 18 then pass through bottom dead centre (BDC) and move towards one another for a compression stroke, the inlet and exhaust valves 24, 26, 28, 30 being closed. Piston 18 lags in crank angle rotation behind piston 16. The air in cylinder 12 i.e. contained in the space between the piston 16 and the adjacent boundary of the catalyst 22, is compressed to a higher pressure for a given crank angle than the gaseous fuel or fuel/air mixture in the similar space in cylinder 14. This forces air from cylinder 12 through the catalyst 22 in the combustion chamber 20 into cylinder 14 and thus initially prevents the gaseous fuel or fuel/air mixture in cylinder 14 entering into the combustion chamber 20 and contacting the catalyst during at least a major part of the compression stroke. However, when piston 16 passes through its TDC and piston 18 in cylinder 14 approaches TDC (Figure 2) the gaseous fuel or fuel/air mixture in cylinder 14 is then forced into the combustion chamber 20 to mix with further air in the chamber 20 where its contact with the catalyst results in combustion of the mixture taking place to effect a power stroke movement of pistons 16, 18 away from one another. The clearance volume of cylinder 14 not included in the combustion chamber 20 should be kept to a minimum.

A change in the phase lag in the compression movement of the piston 18 in relation to the piston 16 serves to effect a change in the timing of the transfer of the gaseous fuel or fuel/air mixture into the combustion chamber 20, to allow for ignition delay. The ignition delay being a period of time indicated by the speed of initiation of combustion by the catalyst and the speed of propogation of combustion.

To enable a satisfactory initiation of combustion in the combustion chamber 20 at higher speeds the lag in crankangle rotation of piston 18 behind piston 16 may be decreased, by a suitable governing mechanism, to a value suited to the given engine speed, the adjustment being carried out whilst the engine is running. As is mentioned above, as pistons 16 and 18 move towards each other from bottom dead centre for a compression stroke air from cylinder 12 is forced through the combustion chamber 20 into cylinder 14 to prevent premature entry of gaseous fuel or fuel/air mixture into contact with the catalyst 22 from cylinder 14. The timing of the entry of fuel or fuel/air mixture from cylinder 14 to the catalyst 22 in the combustion chamber 20 is dictated by the phase difference in crank angle rotation of pistons 16 and 18 and which is chosen to suit the ignition delay period necessary for the fuel and air mixture, of a given mass proportion, at a particular engine speed.

At higher engine speeds, when the lag in phase difference of crank angle rotation is decreased, the transfer of air from cylinder 12 into cylinder 14 through the catalyst 22 during the early stages of the compression stroke of pistons 16 and 18 may be assisted or effected using an engine which has a delayed opening of the inlet valve 26 relative to the inlet valve 24 during the induction strokes of the pistons 16 and 18. This helps to provide a reduced pressure in cylinder 14 relative to cylinder 12 during the induction stroke and into the compression stroke to ensure that the flow of gas is from cylinder 12 to cylinder 14, through the combustion chamber 20, preventing premature entry of fuel into the combustion chamber 20. Alternatively or additionally this effect may also be achieved by throttling the fuel or fuel air mixture which is inducted into cylinder 14 through valve 26.

After combustion, the return of the pistons 16, 18 from BDC performs an exhaust stroke to expel the exhaust gases from the cylinders 12, 14 through the exhaust ports 36, 38 and open exhaust valves 28, 30 in readiness for a further induction stroke. Although two such ports are shown, it will be appreciated that only port 36 is sufficient.

The passage of air only during a compression stroke through the combustion chamber 20 from cylinder 12 both purges the combustion chamber 20 of any remaining exhaust gas and also delays entry of gaseous fuel or fuel/air mixture into the combustion chamber 20 and into contact with the catalyst until the piston 16 has substantially reached TDC. During the induction stroke if both inlet valves 24, 26 are opened at the same time there may be a tendency for pressure in cylinder 12 to decrease below pressure in cylinder 14 at a given instant. This would tend to induce the fuel/air mixture admitted to or formed in cylinder 14 to flow into the combustion chamber 20 towards cylinder 12, causing premature combustion. To avoid this, opening of the inlet valve 26 may be delayed a preselected time relative to the inlet valve 24. Alternatively or additionally, this effect may also be achieved by throttling the fuel or fuel/air mixture which is inducted into cylinder 14 through valve 26.

Mixing of the fuel and air mixture from cylinder 14 with air in the combustion chamber 20 from cylinder 12 is enhanced by the provsion of a restriction in the form of a partition plate 40 located between cylinder 14 and the catalyst 22 in the combustion chamber 20, the plate 40 having one or more restriction orifices 42. The plate 40 and orifices 42 restrict and determine the location and rate of entry of the gaseous fuel or. fuel/air mixture into the combustion chamber 20 and into contact with the catalyst 22.

The orifices also control diffusion of the fuel or fuel/air mixture into the combustion chamber to prevent contact with the catalyst until combustion is required, especially at low engine speeds, since during a compression stroke the orifices provide relatively high speed jets of air from cylinder 12 to cylinder 14.

An additional feature of the orifices is that, depending on their size and number, they can be used to prevent relatively fast running of the engine, acting as self governors, by restricting the passage of air, fuel and fuel/air mixture.

Whereas the above refers to four stroke operation of the engine, two stroke operation is also possible with the provision of suitable transfer and exhaust porting.

As is mentioned above, for speed and power output control of the engine the admission of gaseous fuel into the cylinder 14 as fuel or a fuel/air mixture is controlled by either a variable fuel metering jet or jets, or a suitable gas throttle. Alternatively, the rate of injection of pressurised fuel into the cylinder 14 or into an external fuel/air mixing device is metered accordingly. However, admission of air only into the cylinder 12 is not throttled and is controlled only by the inlet valve 24.

For starting purposes a glow plug 44 is shown provided in the combustion chamber 20 to initiate combustion until it is satisfactorily effected by the catalyst. Alternatively, combustion may be initiated by the initial use of fuel gases which react with air in the presence of a catalyst at relatively low temperatures, one such gas being hydrogen.

It will be appreciated that the effect of the catalyst is to allow initiation of combustion of the resulting fuel/air mixture in the combustion chamber 20 at a lower initiation temperature than spark temperature in the case of a spark ignition engine and at a lower pressure than in the case of compression ignition in a conventional compression ignition (diesel) engine. Furthermore, combustion of a much lower ratio of fuel to air is possible with resulting economy of operation when the engine is running at only part load. Higher thermal efficiency at part load is also possible compared with existing engines.

Combustion takes place in a smooth and even manner without or with minimal explosive action so that quiet running with less vibration is obtained, this also being in the interests of reducing stress on and wear of the working parts of the engine. Furthermore, substantially complete combustion of hydrocarbon fuel may be obtained resulting in cleaner exhaust emission well within current regulations in this respect. Peak combustion temperatures can be kept below the temperatures at which nitrogen forms oxides in air resulting in an exhaust emission free or substantially free of pollution from oxides of nitrogen and which again adequately complies with present emission regulations.

The construction and mode of operation of the engine allows air only to pass through the combustion chamber 20 from the cylinder 12 into the cylinder 14 during at least a major part or the whole of the compression stroke thus purging the chamber of the products of previous combustion. The induction of air into the cylinder 12 is not obstructed by a throttle valve so that as much air as possible is allowed to enter the engine. The effect of a transfer of a fuel/air mixture from the cylinder 14 into the combustion chamber 20 at a suitable crank angle near TDC for the cylinder 14 results in the mixture being added to the air already in the chamber 20. This is then followed by combustion initiated by the action of the catalyst 22 at a time which takes account of the rapidity of the initiation and propagation of the combustion process within the chamber 20, this time being determined not by the timing of the fuel or fuel/air induction or by a spark but by the phase difference in crank angle rotation of the pistons 16, 18.

It is believed that the catalyst 22 should have a reasonable serviceable life and the construction of the engine may be such that the catalyst 22 can be readily changed i.e. as a cartridge which can be inserted into and withdrawn from the combustion chamber 3 through a closable opening in the latter preferably without dismantling the engine.

In an alternative arrangement of the engine whether for four stroke or two stroke operation the cylinders 12, 14 may be otherwise arranged e.g. side by side (Figure 3) with their head ends continuously communicated by a combustion chamber 20 containing a catalystic 22. In the arrangement shown in Figure 3 the combustion chamber 20 is arranged in direct communication with the cylinder 14, a communicating duct 46 being provided from and to the cylinder 12. The mode of operation and advantages of this compact arrangement are substantially the same as those already described above.

The pistons 16, 18 of such a side by side arrangement can be connected to operate a common crankshaft whilst any suitable number of pairs of cylinders 12, 14 with respective combustion chambers 20 may be employed.

The absence of spark ignition apparatus simplifies and reduces the cost of manufacture of the engine and also the cost of maintenance. Absence of possible spark ignition failure also ensures greater reliability.

The absence of a high pressure fuel injection pump external to the engine also simplifies and reduces both manufacturing and maintenance costs of the engine.

The pressure of air and fuel or fuel/air mixture may be boosted to assist induction of air into cylinder 12 and fuel or fuel/air mixture into cylinder 14.

## Claims

1. An internal combustion engine comprising:
at least one pair of first and second cylinders (12, 14);
a combustion chamber (20) interconnecting said cylinders (12, 14) at their head ends;
continuously operable ignition means (22) in said combustion chamber;
respective first and second work producing pistons (16, 18) movable in said cylinders (12, 14) towards and away from said combustion chamber (20);
a mechanical coupling between the two pistons which causes the pistons to move relative to one another:
first means (24, 32) for supplying air or other oxygen gases into said first cylinder (12) during an induction stroke of said first piston (16);
second means (26, 34) for supplying fuel to said second cylinder (14); characterised in that:
said first cylinder (12) has a larger swept volume than said second cylinder (14);
said ignition means only partially fills the combustion chamber cross section;
said second means is operable to supply fuel to said second cylinder during an induction stroke of said second piston;
third means are provided comprising a restriction means (42) between the combustion chamber (20) and the second cylinder (14) for assisting the mixing of said fuel/air mixture with air or other oxygen containing gases in said combustion chamber (20) during combustion:
and in that the mechanical coupling between the two piston causes the pistons to create a pressure difference across the restriction means (42) to inhibit flow of fuel/air mixture from the second cylinder (14) into the combustion chamber (20) for ignition by said ignition means until said first piston is in the vicinity of its Top Dead Centre.

2. An engine as claimed in claim 1 wherein said second means is operable to supply a charge of fuel only directly into said second cylinder (14).

3. An engine as claimed in claim 1 or 2 wherein common exhaust port means (28, 36) are provided opening into said first cylinder (12).

4. An engine as claimed in claim 1, 2 or 3 further comprising means for delaying the supply of fuel into said second cylinder (14) relative to the supply of air into said first cylinder (12) for a preselected portion of each induction stroke of said pistons (16, 18).

5. An engine as claimed in any of claims 1 to 4 wherein said restriction means comprises a partition plate (40), between said second cylinder (14) and said combustion chamber (20) and having at least one orifice (42) therethrough.

6. An engine as claimed in any preceding claim wherein said mechanical coupling is operable to adjust the phase difference between the pistons in dependence on the speed of said engine.

7. An engine as claimed in claim 6 wherein said phase difference is continuously adjustable.

8. An engine as claimed in any of claims 1 to 7 wherein at least at low engine speeds said second piston (18) lags said first piston (16).

9. An engine as claimed in any preceding claim wherein said ignition means is a catalyst ignition means.

## Patentansprüche

1. Verbrennungsmotor umfassend:
mindestens ein Paar eines ersten und zweiten Zylinders (12, 14);
eine die Zylinder (12, 14) an ihren Kopfenden miteinander verbindende Verbrennungskammer (20);
eine fortlaufend betriebsfähige Zündeinrichtung (22) in der Verbrennungskammer;
entsprechende erste und zweite, in den Zylindern (12, 14) zur Verbrennungskammer (20) hin und von ihr weg bewegbare arbeitende Kolben (16, 18);
eine mechanische Kupplung zwischen den beiden Kolben, durch die sich die Kolben relativ zueinander bewegen;
eine erste Einrichtung (24, 32) zur Zuführung von Luft oder anderen sauerstoffhaltigen Gasen in den ersten Zylinder (12) während einem Ansaughub des ersten Kolbens (16);
eine zweite Einrichtung (26, 34) zur Zuführung von Brennstoff zum zweiten Zylinder (14); dadurch gekennzeichnet,
daß der erste Zylinder (12) einen größeren Hubraum hat als der zweite Zylinder (14);
die Zündeinrichtung den Querschnitt der Verbrennnungskammer nur teilweise ausfüllt;
die zweite Einrichtung dem zweiten Zylinder während einem Ansaughub des zweiten Kolbens Brennstoff zuführen kann;
eine dritte Einrichtung vorgesehen ist, die eine Beschränkungseinrichtung (42) zwischen der Verbrennnungskammer (20) und dem zweiten Zylinder (14) zur Unterstützung des Mischens des Brennstoff-/Luftgemisches mit Luft oder anderen sauerstoffhaltigen Gasen in der Verbrennungskammer (20) während der Verbrennung umfaßt;
und daß durch zwischen den beiden Kolben bestehende mechanische Kupplung die Kolben einen Druckunterschied über die Beschränkungseinrichtung (42) zur Behinderung eines Flusses von Brennstoff-/Luftgemisch aus dem zweiten Zylinder (14) in die Verbrennungskammer (20) zur Zündung durch die Zündeinrichtung verursachen bis der erste Kolben sich in de Nähe seines oberen Totpunktes befindet.

2. Motor nach Anspruch 1, bei dem die zweite Einrichtung nur dem zweiten Zylinder (14) direkt eine Brennstoffladung zuführen kann.

3. Motor nach Anspruch 1 oder 2, bei dem eine gemeinsame, in das Innere des ersten Zylinders (12) hinein öffnende Auslaßöffnung (28, 36) vorgesehen ist.

4. Motor nach Anspruch 1, 2 oder 3, weiter umfassend eine Einrichtung zum Verzögern der Brennstoffzuführung in den zweiten Zylinder (14) relativ zu der Luftzuführung in den ersten Zylinder (12) während eines vorbestimmten Abschnittes jedes Ansaughubes der Kolben (16, 18).

5. Motor nach einem der Ansprüche 1 bis 4, bei welchem die Beschränkungseinrichtung eine zwischen dem zweiten Zylinder (14) und der Verbrennungskammer (20) befindliche Trennplatte (40) mit mindestens einer durchgehenden Öffnung (42) umfasst.

6. Motor nach einem der vorhergehenden Ansprüche, bei welchem die mechanische Kupplung die Phasendifferenz zwischen den Kolben in Abhängigkeit von der Motordrehzahl einstellen kann.

7. Motor nach Anspruch 6, bei welchem die Phasendifferenz kontinuierlich einstellbar ist.

8. Motor nach einem der Ansprüche 1 bis 7, bei welchem zumindest bei niedrigen Motordrehzahlen der zweite Kolben (18) dem ersten Kolben (16) nachhängt.

9. Motor nach einem der vorhergehenden Ansprüche, bei welchem die Zündeinrichtung eine Katalysatorzündeinrichtung ist.

**Revendications**

1. Moteur à combustion interne comprenant:

au moins une paire de premier et second cylindres (12, 14);

une chambre de combustion (20) reliant entre eux lesdits cylindres (12, 14) à l'extrémité de leurs têtes;

un moyen d'allumage (22) pouvant fonctionner en continu dans ladite chambre de combustion;

des premier et second pistons de travail respectifs (16, 18) pouvant se déplacer dans lesdits cylindres (12, 14) en direction de et en s'éloignant de ladite chambre de combustion (20);

un accouplement mécanique entre les deux pistons, qui fait se déplacer les pistons l'un par rapport à l'autre;

un premier moyen (24, 32) pour fournir l'air ou tout autre gaz contenant de l'oxygène dans ledit premier cylindre (12) pendant une course d'admission dudit premier piston (16);

un second moyen (26, 34) pour fournir le carburant audit second cylindre (14); caractérisé en ce que:

ledit premier cylindre (12) a une cylindrée plus grande que celle dudit second cylindre (14);

ledit moyen d'allumage ne remplit que partiellement la section de la chambre de combustion;

ledit second moyen peut fonctionner pour alimenter en carburant ledit second cylindre pendant une course d'admission dudit second piston;

des troisièmes moyens sont prévus comprenant un moyen de restriction (42) entre la chambre de combustion (20) et le second cylindre (14) pour aider au mélange dudit mélange carburant/air avec l'air ou tout autre gaz contenant de l'oxygène dans ladite chambre de combustion (20) pendant la combustion;

et en ce que l'accouplement mécanique entre les deux pistons fait que les pistons créent une différence de pression à travers le moyen de restriction (42) pour empêcher l'écoulement du mélange carburant/air en provenance du second cylindre (14) de pénétrer dans la chambre de combustion (20) pour l'allumage par ledit moyen d'allumage jusqu'à ce que ledit premier piston soit dans le voisinage de son point mort haut.

2. Moteur selon la revendication 1 dans lequel ledit second moyen peut fonctionner pour fournir une charge de carburant seul directement dans ledit second cylindre (14).

3. Moteur selon la revendication 1 ou 2 dans lequel des moyens de lumière d'échappement communs (28, 36) sont prévus ouvrant dans ledit premier cylindre (12).

4. Moteur selon la revendication 1, 2 ou 3 comprenant en outre des moyens pour retarder l'arrivée du carburant dans ledit second cylindre (14) par rapport à l'arrivée de l'air dans ledit premier cylindre (12) pour une partie prédéterminée de chaque course d'admission desdits pistons (16, 18).

5. Moteur selon n'importe laquelle des revendications 1 à 4 dans lequel ledit moyen de restriction comprend une plaque de séparation (40), située entre ledit second cylindre (14) et ladite chambre de combustion (20) et ayant au moins un orifice (42) à travers celle-ci.

6. Moteur selon n'importe laquelle des revendications précédentes dans lequel ledit accouplement mécanique peut fonctionner pour régler la différence de phase entre les pistons selon la vitesse dudit moteur.

7. Moteur selon la revendication 6 dans lequel ladite différence de phase est réglable de manière continue.

8. Moteur selon n'importe laquelle des revendications 1 à 7 dans lequel au moins à des vitesses de moteur basses ledit second piston (18) reste en arrière dudit premier piston (16).

9. Moteur selon n'importe laquelle des revendications précédentes dans lequel ledit moyen d'allumage est un moyen d'allumage de catalyseur.

*Fig.1.*

*Fig.2.*

Fig.3.

Fig.4.